# EUROPEAN PATENT SPECIFICATION

(11) **EP 4 114 799 B1**
(45) Date of publication and mention of the grant of the patent: **10.01.2024**
(21) Application number: 21707293.3
(22) Date of filing: 26.02.2021
(51) Int. Cl.: C01D 7/00, C01B 32/50, C01F 7/47

(54) **A HYDROTHERMAL PROCESS FOR OXALATE DESTRUCTION**
HYDROTHERMALES VERFAHREN ZUR OXALATZERSTÖRUNG
PROCÉDÉ HYDROTHERMIQUE POUR LA DESTRUCTION D'OXALATE

(30) Priority: 06.03.2020 EP 20161666
(43) Date of publication of application: 11.01.2023
(73) Proprietor: Scfi Limited, Cork (IE)
(72) Inventor: O'REGAN, John, Cork (IE); MCGARRY, David, Cork (IE)
(74) Representative: Weldon O'Brien Ltd.
(86) International application number: PCT/EP2021/054915
(87) International publication number: WO 2021/175731

(56) References cited:
- AU-A1- 2008 229 997
- BANGUN J ET AL: "The photodegradation kinetics of aqueous sodium oxalate solution using TiO2 catalyst", APPLIED CATALYSIS A: GENERAL, ELSEVIER, AMSTERDAM, NL, vol. 175, no. 1-2, 14 December 1998 (1998-12-14), pages 221-235, XP004271580, ISSN: 0926-860X, DOI: 10.1016/S0926-860X(98)00223-3

## Description

### Introduction

The invention relates to oxalate decomposition, for use in processes such as alumina refining ("Bayer" process).

At present some alumina refining processes give rise to a hazardous solid waste product comprising components such as sodium oxalate (Na₂C₂O₄), sodium carbonate, and sodium hydroxide for disposal, which is sometimes pressed to the form of a salt cake.

U2008/229997 (Alcoa Australia, Siemens) describes a method for the hydrothermal treatment of an alkaline feed solution.

The invention is directed towards effectively decomposing this product in an environmentally friendly and cost-effective manner.

### Summary

The invention provides a hydrothermal process as set out in claim 1 and claims 2 to 10, and an alumina refining process incorporating this hydrothermal process as set out in claim 11 and claims 12-15.

We describe a hydrothermal process for treatment of a waste stream including sodium oxalate (Na₂C₂O₄), the method comprising the steps of:
(a) feeding the stream through a tubular reactor in a manner to avoid precipitation, at a temperature in the range of 250°C to 330°C, a pressure in the range of 90 to 160 Bar, and with a retention time in the range of 8 minutes to 30 minutes to provide treated liquid,
(b) separating the treated liquid to provide a gas and a liquid containing sodium carbonate,
(c) treating the gas to provide a safe discharge to the atmosphere, and
(d) treating the separated liquid to provide a treated stream.

Preferably, the temperature of the stream in the tubular reactor is in the range of 290°C to 330°C, and the destruction reaction includes Na₂C₂O₄ + Heat => Na₂CO₃ + CO. In one example, the temperature of the stream in the tubular reactor is in the range of 300°C to 315°C.

In one example, the flow rate in the tubular reactor is in the range of 1 to 25 m³/hr, preferably 10 to 15 m³/hr.

Preferably, heat is applied to the tubular reactor to elevate the temperature of the stream in the tubular reactor by a value in the range of 20°C to 60°C.

Preferably, the pressure of the stream in the tubular reactor is in the range of 95 Bar to 110 Bar. Preferably, the retention time of the stream in the tubular reactor is in the range of 10 mins to 15 mins. Preferably, the reactor is fed by an inlet heat exchanger and delivers a treated stream to an outlet heat exchanger which reduces temperature of the stream, and said heat exchangers are coupled in a circuit for heat recovery from the outlet heat exchanger.

Preferably, the heat recovery coupling circuit circulates a heat transfer medium, one of which could be water at a pressure in the range of 90Bar to 110Bar. As an alternative, thermal oil could be utilised as a heat transfer medium. Preferably, the step (b) includes a liquid separator in which a pusher gas such as nitrogen N₂ is applied under pressure to push CO to a side stream in which it is treated.

Preferably, in step (c) the CO and pusher gas stream is treated by mixing with air and routing it through a catalytic converter to provide CO₂. Preferably, in step (d) the liquid stream is mixed with Ca(OH) to provide a reaction of Ca(OH) + Na₂CO₃ to provide 2NaOH + CaCO₃.

Preferably, the feed stream of the hydrothermal process is a solids waste stream from an alumina refining process, and an output stream from step (d) is fed back to a digestion stage of the alumina refining process.

Preferably, the digestion stage includes aluminium-bearing minerals being dissolved at high temperatures and in the presence of sodium hydroxide, in which a by-product of this extraction is the solubilization of organics present into an alkaline liquor, and dissolved organics degrade to form sodium oxalate in solution.

Preferably, the feed stream is derived from a side stream from classification and evaporation steps for concentrating oxalate for removal from the process, and overheads liquor from the evaporation step is returned to the digestion stage, while the underflow is processed in a thickener stage which provides the reactor feed stream.

Preferably, the underflow from a thickener stage is subjected to vacuum or pressure filtration and yields a filter cake with a dry-mass % of 60% - 80% and having a caustic concentration of up to 30wt% and containing precipitated sodium oxalate, and said filter cake provides at least some of the reactor feed stream.

Preferably, the sodium carbonate is reacted with lime to provide sodium hydroxide NaOH and CaCO3 by the reaction Ca(OH)2 + Na₂CO₃ => CaCO₃ + 2NaOH, reducing the total intake requirement for fresh sodium hydroxide in the alumina refining process.

Preferably, the CaCO3 is disposed of from a clarification step with red mud.

Preferably, the feed stream is treated by a pressure filtration system before heating and delivery to the tube reactor. Preferably, filtrate from the filtration system returns to the alumina refining process while a filter cake, consisting of 60 - 80% dry solids is dissolved in a back-wash cycle using hot condensate or water.

Preferably, a high-pressure pump is used for backwashing and a solution of salts returns to a condensate tank, and said tank is utilized as a feed tank to the tubular reactor.

Preferably, the caustic dilution step ensures solubility limits of sodium carbonate at any point during the process are not exceeded. Preferably, a pump, is used to pump the oxalate containing feed through a pre-heater, and the outlet of said heater is at 200°C to 260°C and is sent to the tubular reactor.

Preferably, a fired or hot flue gas) heater or electrical heating increases the temperature of the stream to a value in the range of 290°C to 330°C. Preferably, the stream is further cooled downstream of the reactor by cooler, to a temperature in the range of 40°C to 80°C.

Preferably, the pressure is reduced downstream of the reactor by passing the stream through a series of coils. Preferably, the process introduces choke water to the coils to control the pressure drop across said coils.

Preferably, a degassed stream includes cooled liquid containing Sodium Carbonate (Na₂CO₃), and this is preferably mixed with Ca(OH)₂, giving 2NaOH + CaCO₃ (solid), which is fed back to an alumina refining process digestion stage.

Preferably, the tubular reactor is a finned tubular configuration, with an undulating path to achieve the desired retention time, allowing efficient heating using hot gas. Preferably, one or more of the heat exchangers has a tube-in-tube configuration, the outer tube carrying pressurised hot water.

We also describe an alumina refining process comprising the steps of delivering a waste stream as a feed stream to a hydrothermal process of any example herein. Preferably, the hydrothermal process feeds filtrate back to a digestion stage. Preferably, a classification stage feeds liquor back to the digestion stage.

Preferably, the alumina process waste stream is fed from a thickening stage or an evaporation stage, and is directed through an in-line pressure filter to reduce the liquid content, and recovered solids are back washed from the filter using water (preferably hot condensate water), providing liquor which is low in sodium hydroxide content and is directed to the hydrothermal reactor.

In one, non-limiting example, the alumina process waste stream has a solids content in the range of 24% to 28% w/w.

### Detailed Description of the Invention

The invention will be more clearly understood from the following description of some embodiments thereof, given by way of example only with reference to the accompanying drawings in which:
Fig. 1 is a process diagram of a modified alumina "Bayer" production process in which there is additionally treatment of a solid waste product with decomposition of sodium oxalate and feedback of a filtrate back to a digestion stage; and
Fig. 2 is a process flow diagram illustrating the steps for treatment of the solid waste stream in detail.

We describe an alumina refining process, in which a side stream is directed to a thickening step following evaporation, giving rise to a precipitated sodium oxalate Na₂C₂O₄ waste stream. This is treated by a hydrothermal process, which takes place either before thickening or after thickening. In the example described below the hydrothermal process takes place after thickening (16).

The hydrothermal process may treat waste streams from a variety of sources such as alumina refining. For example, it may treat a waste stream with sodium oxalate as the main contaminant in solution, formed as a by-product from the solubilisation of organics present in an alkaline liquor. This occurs within the digestion stage where aluminium-bearing minerals are being dissolved at high temperatures and in the presence of sodium hydroxide. Also, the feed stream may be derived from a side stream from classification and evaporation steps for concentrating oxalate for removal from the process, and overheads liquor from the evaporation step is returned to the digestion stage, while the underflow is processed in a thickener stage which provides the reactor feed stream. In such a source process, the underflow from a thickener stage may be subjected to vacuum or pressure filtration and yield a filter cake with a dry-mass % of 60% - 80% and having a caustic concentration of up to 30wt% and containing precipitated sodium oxalate, and said filter cake provides at least some of the reactor feed stream.

The waste stream is fed through a tubular reactor by an inlet heat exchanger which elevates the stream temperature from a value typically in the range of 20°C to 40°C to a value in the range of 240 °C to 260 °C. The stream is pumped through the reactor in which sodium oxalate decomposition takes place in a hydrothermal process with:
a pressure in the range of 90 Bar to 160 Bar, preferably in the range of 95 Bar to 110 Bar,
a temperature in the range of 290°C to 330°C, preferably about 300°C to 315°C, and
a retention time in the range of 8mins to 30 mins, preferably in the range of 10 mins to 15 mins.

There is temperature elevation in the reactor of 30 °C to 70°C, and energy for this is supplied by an auxiliary source, which may be for example natural gas or hot flue gas from the calcining process.

Downstream of the reactor there is an outlet heat exchanger which reduces the temperature of the treated stream, and there is significant heat recovery to drive the inlet heat exchanger. There is circulation of high pressure and temperature water between the heat exchangers, at a pressure of preferably 90 to 110 Bar. There is a high-pressure pump upstream of the inlet heat exchanger to maintain the desired pressure through the reactor. A second high-pressure pump drives the hot pressurised water circuit, recovering energy from the reactor effluent to the reactor feed.

The reactor is a finned tubular design, with an undulating path to achieve the desired retention time. The tubular hairpin design of the tubular reactor ensures easy heating using hot gas. The heat exchangers are shell-in-tube or tube-in-tube, the outer tube carrying the pressurised hot water.

Because the reactor is tubular it is easily enclosed within a thermally insulated fired kiln which ensures constant reaction temperature. The decomposition process is energy efficient. This is especially due to the heat recovery from the outlet heat exchanger. The flow rate is maintained due to the pump pressure, ensuring line velocities sufficient to limit potential precipitation from the liquid. In various examples the flow rate is preferably in the range of 1 cubic meters per hour (m³/hr) to 25 m³/hr, preferably 10 m³/hr to 15 m³/hr.

The stream from the outlet heat exchanger is preferably degassed, with a flow of CO and Nitrogen which was used as a pusher, and this is mixed with air and directed to a catalytic reactor to form carbon dioxide which may be vented to atmosphere. The degassed stream is cooled liquid containing Sodium Carbonate (Na₂CO₃), and this is preferably mixed with Ca(OH)₂, giving 2NaOH + CaCO₃ (solid), which is fed back to the alumina refining process digestion stage.

The side stream which is treated preferably has a solids content in the range of 24% to 28%, and hence it can be taken from the Bayer circuit alumina refining stream and is preferably directed to in-line pressure filters to remove the liquid content. The recovered solids are automatically back washed from the filter using water preferably hot condensate water. This liquor is low in sodium hydroxide content and is directed to the hydrothermal reactor.

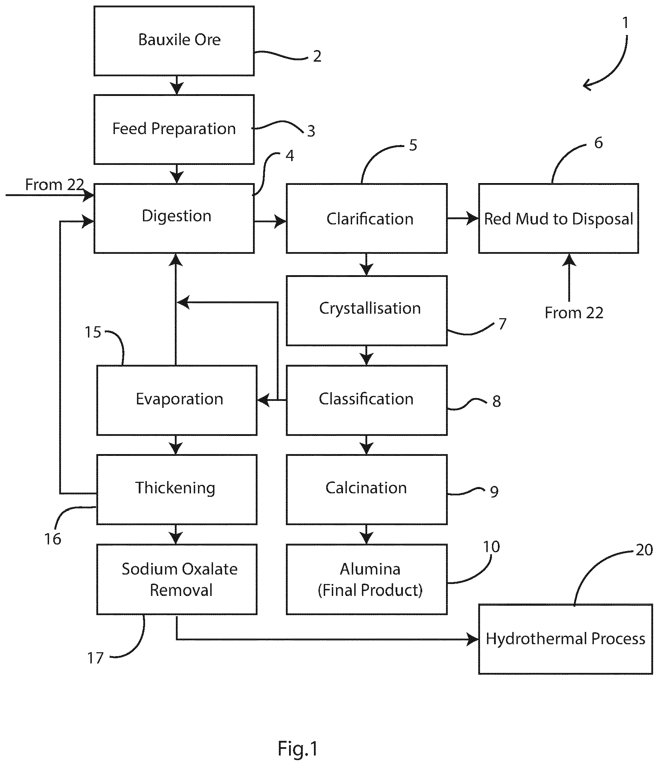

Referring to Fig. 1, in a refining process 1 alumina is manufactured using the "Bayer" process to extract alumina from bauxite ore 2 delivered by a feed preparation stage 3. In a digestion step 4 aluminium-bearing minerals are dissolved at high temperatures and sodium hydroxide. A by-product of this extraction is the solubilization of organics present into an alkaline liquor. The dissolved organics may degrade to form sodium oxalate in solution. Oxalate is regarded by many as the main problematic contaminant in this type of alumina refining. Oxalate originates from the decompositions of high molecular weight organic compounds, particularly humic and fulvic acids. These compounds are naturally present in the bauxite ore feedstock. Humic and Fulvic acids are soluble in alkaline solutions, decompose at high temperatures and thus oxalate formation primarily occurs in the digestion step 4. Insoluble components (generally referred to as red mud) are removed and disposed of in a clarification step 5 to provide a stream 6 of red mud.

In crystallization and classification steps 7 and 8, aluminium is recovered from the supersaturated caustic solution by means of precipitating alumina tri-hydrate. A series of thickening steps allow for separating the coarse alumina tri-hydrate from the finer crystals. The coarse fraction is then sent to a calcination stage 9 where it is de-liquored, washed and dried, converting it to alumina. The spent liquor from the classification stage 8 is routed back to the digestion stage 4, and a side stream from this main spent liquor stream goes to the evaporation stage 15.

The side stream from the classification step 8 is sent to the deep evaporation step 15 with the aim of concentrating oxalate for removal from the process. The overheads liquor from the evaporation step 15 is returned to digestion, while the underflow is processed in a thickener stage 16. The underflow from the thickener 16 is subjected to vacuum or pressure filtration and yields a filter cake 17 with a dry-mass % of 60 - 80%. This filter cake has a caustic concentration of up to 30wt% and contains precipitated sodium oxalate. The filter cake is a hazardous solid waste stream and special storage considerations are required.

It is this by-product which is hydrothermally treated as set out above in a process 20, however, the hydrothermal treatment may use as feedstock the direct output from the evaporation stage 15.

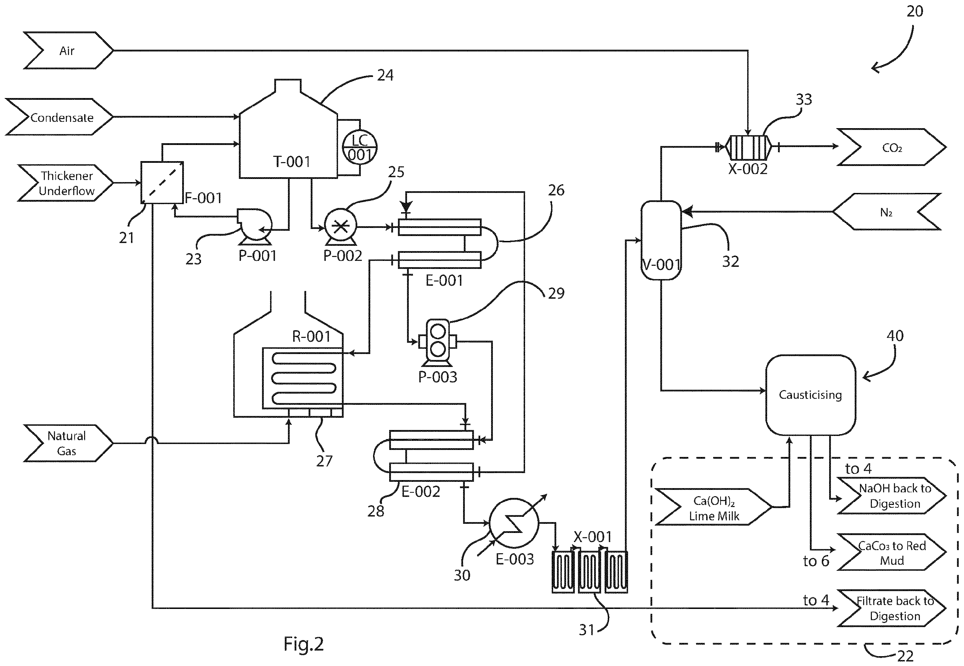

This hydrothermal process 20 is illustrated in Fig. 2, and it achieves hydrothermal destruction of oxalate. Sodium oxalate (Na₂C₂O₄) decomposes at temperatures greater than about 290°C into sodium carbonate (Na₂CO₃) and carbon monoxide (CO). Hydrothermal destruction relates to the decomposition of Na₂C₂O₄ in aqueous solution at temperatures in excess of 290°C. In one preferred example, destruction of dissolved Na₂C₂O₄ is achieved with exposing the solution to temperatures between 290°C - 330°C, pressures of 100 - 160 Bar and a duration between 8 minutes to 30 minutes.

The main reaction is:

Na₂C₂O₄ + Heat => Na₂CO₃ + CO

Achieving sodium oxalate destruction on a large industrial scale eliminates the need for special storage considerations of the hazardous solid waste stream. Additional to the destruction of oxalate, sodium carbonate is generated from the reaction. This sodium carbonate, when reacted with lime, results in the production of sodium hydroxide (NaOH), reducing the total intake requirement for fresh sodium hydroxide thus generating significant cost savings. CaCO₃ can be disposed of from the clarification step with the red mud:

Ca(OH)₂ + Na₂CO₃ => CaCO₃ + 2NaOH

Fig. 2 illustrates the hydrothermal decomposition of the oxalate contained within the filter cake stream originating from the thickener underflow. The solubility of sodium oxalate and sodium carbonate is highly dependent on the caustic concentration of the liquor stream. There is an indirect relationship between the solubility of these two components and the caustic concentration of the liquor. The thickened precipitated salt slurry contains approximately 30wt% sodium hydroxide. Due to the high sodium hydroxide concentration in this stream, sodium oxalate and sodium carbonate has a decreased solubility and a higher tendency the precipitate.

The thickener underflow is sent to a sequenced pressure filtration system. The filtrate from a filter 21 (F-001) returns to the process while the filter cake, consisting of 60 - 80% dry solids are dissolved in a back-wash cycle using hot condensate or water. A high-pressure pump 23 (P-001) is used for backwashing and the solution of salts returns to the condensate tank. When the filter 21, F-001, is in the filtration sequence, a tank 24, T-001, is utilized as a feed tank to a hydrothermal decomposition tubular reactor 27. The dilution step is very advantageous because the solubility limits depend on caustic concentration of the stream. As sodium oxalate will be converted to sodium carbonate, sufficient caustic dilution is essential to ensure solubility limits of sodium carbonate at any point during the operation of the plant are not exceeded.

The sodium oxalate in the thickener underflow stream has a concentration ranging from 6-10 g/L. The sodium carbonate concentration ranges from 25 - 40 g/L. From the reaction stoichiometry 1 gram of sodium oxalate will be converted to 0.8 grams of sodium carbonate. Thus, the maximum increase in sodium carbonate, assuming 100% destruction of a 10 g/L sodium oxalate solution, is 8 grams. The solubility of sodium carbonate in pure water at elevated temperatures (300°C - 320°C) range between 50 - 80 g/L. Furthermore, the solubility of sodium carbonate in pure water is reduced by approximately 20 - 25% as the molar concentration of sodium hydroxide is increased to 1M. The process 20 achieves a dilution ratio that achieves a maximum sodium hydroxide concentration of 40 g/L. This will ensure a solubility limit for the sodium carbonate ranging between 37 - 60 g/L. One should ensure that the dilution effect the sodium carbonate concentration in the effluent stream to be within the specified solubility range. Thus, [Na₂CO₃] + 0.8 × [Na₂C₂O₄] << [37 - 60] g/L.

A high-pressure pump 25, P-002, is used to pump the oxalate containing feed through a pre-heater 26, E-001, where energy from the plant effluent stream is recovered and utilized for feed preheating. The outlet of E-001 is at 200 - 260°C and is sent to the tubular reactor vessel 27, R-001. A fired (or hot flue gas) heater (electrical heating can also be utilized) increases the temperature of the stream to 290°C - 330°C. The tubular reactor allows for a residence time of 8 - 30 minutes (more preferably 10 - 15 minutes). In the tubular reactor, the sodium oxalate thermally decomposes to form sodium carbonate and carbon monoxide.

Effluent from R-001 is at a temperature of 290°C - 330°C and a pressure of 100 - 160 Bar and passes through a heat recovery heat exchanger 28, E-002. A pressurized water loop, driven by a pump 30 (P-003) circulates water from E-001 to E-002 and back to E-001 and allows for heat recovery from the effluent stream. The effluent stream is further cooled in the process cooler, E-003, to a temperature of 40 - 80°C.

The system pressure is reduced by passing the effluent through a series of coils (31, X-001) or other pressure reduction device. Introducing choke water to the coils 31 as a means of controlling the pressure drop across X-001.

The effluent is sent to a gas-liquid separator vessel 32 (V-001) where the gaseous product from the decomposition is removed using a nitrogen (or other inert gas) and directed to a catalytic converter 33 (X-002). The catalytic converter 33 ensures the conversion of the generated carbon monoxide to carbon dioxide. The carbon dioxide may be released to the atmosphere.

The degassed, separated sodium carbonate (Na₂CO₃) laden liquor from the gas-liquid separator (32) is then combined with milk of lime Ca(OH)₂ in a causticizing step (40) to produce sodium hydroxide NaOH and calcium carbonate CaCO₃ (solid). The calcium carbonate precipitates from solution and can be disposed of as a non-hazardous waste with the red mud utilising already existing plant infrastructure (6). Sodium hydroxide is recovered from the causticizing process (40) back to the digestion step (4) and this reduces the need for fresh sodium hydroxide to be added.

The hydrothermal process allows for destruction of the sodium oxalate and thus eliminates the need of disposing a hazardous solid waste stream requiring special storage considerations. This in turn allows for improved control of oxalate levels in an alumina refining process with the resultant improved final product quality as well as reduced operating cost. Sodium hydroxide is recovered from the decomposition of sodium oxalate, not only eliminating the hazardous waste stream, but also generating value from it. The feed dilution step allows for eliminating solid precipitation in the tubular reactor by ensuring that the caustic concentration of the feed to the unit is sufficiently reduced (NaOH = 20 - 40 g/L). The hydrothermal process tubular reactor, holds the following advantages above the utilization of an autoclave arrangement.
Tubular reactor presents excellent surface area for heat transfer
Ensures efficient transport of solids (eliminates settlement)
Employs high pressure water circuit to transfer heat from post reaction effluent to pre-reaction feed.

Also, the use of a tubular reactor allows for improved safety as there is secondary containment due to the tube-in-tube arrangement.

Tubular reactors eliminate the requirement for a statutory pressure vessel and all the required maintenance activities that goes with operation of a statutory pressure vessel.

By using heat recovery this allows for cooling of the effluent stream to temperatures below the boiling point of water to enable the flash off the gaseous decomposition product in the gas-liquid separator without the generation of steam.

The separated gas (carbon monoxide) is catalytically converted to carbon dioxide.

The invention is not limited to the embodiments described but may be varied in construction and detail within the scope of the claims.

## Claims

1. A hydrothermal process for treatment of a waste stream including sodium oxalate Na₂C₂O₄, the method comprising the steps of:
(a) feeding the stream through a tubular reactor (27) at a dilution sufficient to avoid precipitation, at a temperature in the range of 250°C to 330°C, a pressure in the range of 90 to 160 Bar, and with a retention time in the range of 8 minutes to 30 minutes to provide treated liquid,
(b) separating (32) the treated liquid to provide a gas and a liquid comprising sodium carbonate,
(c) treating (33) the gas from step (b) to provide a gas discharge with carbon dioxide, and
(d) treating (40) the separated liquid from step (b) to provide a treated stream.

2. A hydrothermal process as claimed in claim 1, wherein the temperature of the stream in the tubular reactor is in the range of 290°C to 330°C, and a sodium oxalate destruction reaction including Na₂C₂O₄ + Heat => Na₂CO₃ + CO takes place in the tubular reactor.

3. A hydrothermal process as claimed in claims 1 or 2, wherein the flow rate in the tubular reactor is in the range of 1 to 25 m³/hr, wherein the pressure of the stream in the tubular reactor is in the range of 95 Bar to 110 Bar, and wherein the retention time of the stream in the tubular reactor is in the range of 10 mins to 15 mins.

4. A hydrothermal process as claimed in any preceding claim, wherein the reactor is fed by an inlet heat exchanger and delivers a treated stream to an outlet heat exchanger which reduces temperature of the stream, and said heat exchangers are coupled in a circuit for heat recovery from the outlet heat exchanger, and optionally the heat recovery coupling circuit circulates water at a pressure in the range of 90Bar to 1 10Bar.

5. A hydrothermal process as claimed in any preceding claim, wherein the step (b) includes a liquid separator in which a pusher gas such as nitrogen N₂ is applied under pressure to push CO to a side stream in which it is treated, and wherein in step (c) the CO and pusher gas stream is treated by mixing with air and routing it through a catalytic converter to provide CO₂, and wherein the step (c) provides a gas comprising nitrogen and carbon dioxide at a temperature in a range of 40°C to 60°C, and wherein in step (d) the liquid stream is mixed with Ca(OH)₂ to provide a reaction of Ca(OH)₂ + Na₂CO₃ to provide 2NaOH + CaCO₃.

6. A hydrothermal process as claimed in any preceding claim, wherein the feed stream of the hydrothermal process is a solids waste stream from an alumina refining process, and an output stream from step (d) is fed back to a digestion stage (4) of the alumina refining process, and wherein the sodium carbonate is reacted with lime to provide sodium hydroxide NaOH and CaCO₃ by the reaction Ca(OH)₂ + Na₂CO₃ => CaCO₃ + 2NaOH.

7. A hydrothermal process as claimed in any preceding claim, wherein the feed stream is treated by a pressure filtration system (21) before heating and delivery to the tube reactor, and optionally a filter cake with dry solids is dissolved in a back wash cycle using condensate or water, and a high-pressure pump (23, P-001) is used for said backwashing and a solution of salts returns to a condensate tank (24, T-001), and said tank is utilized as a feed tank to the tubular reactor (27).

8. A hydrothermal process as claimed in any preceding claim, wherein a pump (25, P-002), is used to pump the feed through a pre-heater (26, E-001), and the outlet of said heater (E-001) is at 200°C to 260°C and is sent to the tubular reactor (27, R-001).

9. A hydrothermal process as claimed in any preceding claim, wherein the pressure is reduced downstream of the reactor by passing the stream through a series of coils (31, X-001).

10. A hydrothermal process as claimed in any preceding claim, wherein the tubular reactor is a finned tubular configuration, with an undulating path to achieve the desired retention time, allowing efficient heating using hot gas, and optionally wherein one or more of the heat exchangers has a tube-in-tube configuration, the outer tube carrying pressurised hot water, or thermal oil for heat recovery.

11. An alumina refining process comprising the steps of ore digestion and processing steps to provide a waste stream with sodium oxalate, and delivering at least some of said waste stream as a feed stream to a hydrothermal process of any preceding claim.

12. An alumina refining process as claimed in claim 11, wherein the hydrothermal process feeds filtrate back to the digestion step (4), and wherein a classification stage (8) feeds liquor back to the digestion step (4).

13. An alumina refining process as claimed in claims 11 or 12, wherein the alumina process waste stream is fed to the hydrothermal process from a thickening stage (16) or an evaporation stage (15), and is directed through an in-line pressure filter (21) to reduce the waste stream liquid content, and recovered solids are back washed from the filter to provide liquor which is directed to the hydrothermal reactor.

14. An alumina refining process as claimed in any of claims 11 to 13, wherein in the hydrothermal process the sodium carbonate is reacted with lime to provide sodium hydroxide NaOH and CaCO₃ by the reaction Ca(OH)₂ + Na₂CO₃ => CaCO₃ + 2NaOH, reducing the total intake requirement for fresh sodium hydroxide in the alumina refining process.

15. An alumina refining process as claimed in any of claims 11 to 14, wherein in the hydrothermal process the feed stream is treated by a pressure filtration system (21) before heating and delivery to the tube reactor, and wherein filtrate from the filtration system (21, F-001) returns to the alumina refining process, and optionally the liquid from step (b) of the hydrothermal process includes cooled liquid comprising Sodium Carbonate Na₂CO₃, and this is mixed with Ca(OH)₂, giving 2NaOH + CaCO₃ solid, which is fed back to an alumina refining process digestion step (4).

## Patentansprüche

1. Hydrothermisches Verfahren für die Behandlung eines Abfallstrom, der Natriumoxalat, Na₂C₂O₄, einschließt, wobei das Verfahren die folgenden Schritte umfasst:
(a) Zuführen des Stroms durch einen Rohrreaktor (27) bei einer Verdünnung, die zur Vermeidung von Niederschlag ausreicht, bei einer Temperatur in dem Bereich von 250 °C bis 330 °C, einem Druck in dem Bereich von 90 bis 160 Bar und mit einer Retentionszeit in dem Bereich von 8 Minuten bis 30 Minuten, um behandelte Flüssigkeit bereitzustellen,
(b) Trennen (32) der behandelten Flüssigkeit, um ein Gas und eine Flüssigkeit, die Natriumcarbonat umfasst, bereitzustellen,
(c) Behandeln (33) des Gases aus Schritt (b), um eine Gasabführung mit Kohlendioxid bereitzustellen, und
(d) Behandeln (40) der abgetrennten Flüssigkeit aus Schritt (b), um einen behandelten Strom bereitzustellen.

2. Hydrothermisches Verfahren nach Anspruch 1, wobei die Temperatur des Stroms in dem Rohrreaktor in dem Bereich von 290 °C bis 330 °C liegt und eine Natriumoxalat-Zersetzungsreaktion, die Na₂C₂O₄ + Wärme => Na₂CO₃ + CO einschließt, in dem Rohrreaktor stattfindet.

3. Hydrothermisches Verfahren nach den Ansprüchen 1 oder 2, wobei die Flussrate in dem Rohrreaktor in dem Bereich von 1 bis 25 m³/Std. liegt, wobei der Druck des Stroms in dem Rohrreaktor in dem Bereich von 95 Bar bis 110 Bar liegt und wobei die Retentionszeit des Stroms in dem Rohrreaktor in dem Bereich von 10 min bis 15 min liegt.

4. Hydrothermisches Verfahren nach einem vorstehenden Anspruch, wobei der Reaktor durch einen Einlass-Wärmetauscher gespeist wird und einen behandelten Strom zu einem Auslass-Wärmetauscher abführt, der die Temperatur des Stroms reduziert, und die Wärmetauscher in einem Kreislauf zur Wärmerückgewinnung von dem Auslass-Wärmetauscher verbunden sind und optional der Verbindungskreislauf der Wärmerückgewinnung Wasser bei einem Druck in dem Bereich von 90 Bar bis 110 Bar zirkuliert.

5. Hydrothermisches Verfahren nach einem vorstehenden Anspruch, wobei der Schritt (b) einen Flüssigkeitsabscheider einschließt, in dem ein Verdrängungsgas, wie zum Beispiel Stickstoff, N₂, unter Druck angewendet wird, um CO zu einem Seitenstrom zu verdrängen, in dem es behandelt wird, und wobei im Schritt (c) das CO und der Verdrängungsgasstrom durch Mischen mit Luft und Leiten durch einen katalytischen Konverter, um CO₂ bereitzustellen, behandelt werden und wobei der Schritt (c) ein Gas bereitstellt, das Stickstoff und Kohlendioxid bei einer Temperatur in einem Bereich von 40 °C bis 60 °C umfasst, und wobei im Schritt (d) der Flüssigkeitsstrom mit Ca(OH)₂ gemischt wird, um eine Reaktion von Ca(OH)₂ + Na₂CO₃ bereitzustellen, um 2NaOH + CaCO₃ bereitzustellen.

6. Hydrothermisches Verfahren nach einem vorstehenden Anspruch, wobei der Zuführungsstrom des hydrothermischen Verfahrens ein Feststoffabfallstrom von einem Aluminiumoxid-Raffinationsverfahren ist und ein Auslassstrom von Schritt (d) zurück zu einer Aufschlussstufe (4) des Aluminiumoxid-Raffinationsverfahrens geführt wird und wobei das Natriumcarbonat mit Kalk zur Reaktion gebracht wird, um Natriumhydroxid NaOH und CaCO₃ durch die Reaktion
Ca(OH)₂ + Na₂CO₃ => CaCO₃ + 2NaOH bereitzustellen.

7. Hydrothermisches Verfahren nach einem vorstehenden Anspruch, wobei der Zuführungsstrom durch ein Druckfiltrationssystem (21) vor dem Erwärmen und der Abführung zu dem Rohrreaktor behandelt wird und optional ein Filterkuchen mit trockenen Feststoffen in einem Rückspülzyklus unter Verwendung von Kondensat oder Wasser gelöst wird und eine Hochdruckpumpe (23, P-001) für die Rückspülung verwendet wird und eine Lösung von Salzen zu einem Kondensattank (24, T-001) zurückgeführt wird und der Tank als ein Zuführungstank zu dem Rohrreaktor (27) verwendet wird.

8. Hydrothermisches Verfahren nach einem vorstehenden Anspruch, wobei eine Pumpe (25, P002) verwendet wird, um die Zuführung durch einen Vorheizer (26, E-001) zu pumpen und der Auslass des Heizers (E-001) 200 °C bis 260 °C aufweist, und zu dem Rohrreaktor (27, R-001) weitergeleitet wird.

9. Hydrothermisches Verfahren nach einem vorstehenden Anspruch, wobei der Druck nach dem Reaktor durch Hindurchleiten des Stroms durch eine Reihe von Rohrschlangen (31, X-001) reduziert wird.

10. Hydrothermisches Verfahren nach einem vorstehenden Anspruch, wobei der Rohreaktor eine gerippte röhrenförmige Konfiguration mit einem wellenförmigen Weg ist, um die gewünschte Retentionszeit zu erreichen, was ein effizientes Erwärmen unter Verwendung von heißem Gas erlaubt, und optional wobei einer oder mehrere der Wärmetauscher eine Rohr-in-Rohr-Konfiguration aufweist, wobei das äußere Rohr unter Druck gesetztes, heißes Wasser oder Thermoöl für die Wärmerückgewinnung trägt.

11. Aluminiumoxid-Raffinationsverfahren, umfassend die Schritte des Erzaufschlusses und Verarbeitungsschritte, um einen Abfallstrom mit Natriumoxalat bereitzustellen, und des Abführens von zumindest etwas des Abfallstroms als ein Zuführungsstrom zu einem hydrothermischen Verfahren nach einem vorstehenden Anspruch.

12. Aluminiumoxid-Raffinationsverfahren nach Anspruch 11, wobei das hydrothermische Verfahren Filtrat zu dem Aufschlussschritt (4) zurückführt und wobei eine Klassierungsstufe (8) Lauge zu dem Aufschlussschritt (4) zurückführt.

13. Aluminiumoxid-Raffinationsverfahren nach den Ansprüchen 11 oder 12, wobei der Abfallstrom des Aluminiumoxid-Verfahrens zu dem hydrothermischen Verfahren von einer Eindickungsstufe (16) oder einer Verdampfungsstufe (15) zugeführt wird und durch einen Inline-Druckfilter (21) geleitet wird, um den Flüssigkeitsgehalt des Abfallstroms zu reduzieren, und zurückgewonnene Feststoffe aus dem Filter zurückgespült werden, um Lauge bereitzustellen, die zu dem hydrothermischen Reaktor geleitet wird.

14. Aluminiumoxid-Raffinationsverfahren nach einem der Ansprüche 11 bis 13, wobei in dem hydrothermischen Verfahren das Natriumcarbonat mit Kalk zur Reaktion gebracht wird, um Natriumhydroxid NaOH und CaCO₃ durch die Reaktion Ca(OH)₂ + Na₂CO₃ => CaCO₃ + 2NaOH bereitzustellen, was den Gesamtaufnahmebedarf für frisches Natriumhydroxid in dem Aluminiumoxid-Raffinationsverfahren reduziert.

15. Aluminiumoxid-Raffinationsverfahren nach einem der Ansprüche 11 bis 14, wobei in dem hydrothermischen Verfahren der Zuführungsstrom durch ein Druckfiltrationssystem (21) vor dem Erwärmen und der Abführung zu dem Rohrreaktor behandelt wird und wobei Filtrat von dem Filtrationssystem (21, F-001) zu dem Aluminiumoxid-Raffinationsverfahren zurückgeführt wird und optional die Flüssigkeit aus Schritt (b) des hydrothermischen Verfahrens gekühlte Flüssigkeit einschließt, die Natriumcarbonat, Na₂CO₃, umfasst, und diese mit Ca(OH)₂ gemischt wird, was 2NaOH + CaCO₃ als Feststoff ergibt, das zu einem Aufschlussschritt (4) des Aluminiumoxid-Raffinationsverfahrens zurückgeführt wird.

## Revendications

1. Procédé hydrothermal destiné au traitement d'un flux de déchets comportant de l'oxalate de sodium Na₂C₂O₄, la méthode comprenant les étapes :
(a) d'alimentation du flux à travers un réacteur tubulaire (27) selon une dilution suffisante pour éviter une précipitation, à une température dans la plage allant de 250°C à 330°C, à une pression dans la plage allant de 90 à 160 bars, et avec un temps de rétention dans la plage allant de 8 minutes à 30 minutes, afin de fournir un liquide traité,
(b) de séparation (32) du liquide traité, afin d'obtenir un gaz et un liquide comprenant du carbonate de sodium,
(c) de traitement (33) du gaz issu de l'étape (b), afin d'obtenir une décharge de gaz contenant du dioxyde de carbone, et
(d) de traitement (40) du liquide séparé issu de l'étape (b), afin d'obtenir un flux traité.

2. Procédé hydrothermal selon la revendication 1, dans lequel la température du flux dans le réacteur tubulaire se trouve dans la plage allant de 290°C à 330°C, et une réaction de destruction de l'oxalate de sodium comportant Na₂C₂O₄ + Chaleur => Na₂CO₃ + CO a lieu dans le réacteur tubulaire.

3. Procédé hydrothermal selon les revendications 1 ou 2, dans lequel le débit dans le réacteur tubulaire se trouve dans la plage allant de 1 à 25 m³/h, où la pression du flux dans le réacteur tubulaire se trouve dans la plage allant de 95 bars à 110 bars, et où le temps de rétention du flux dans le réacteur tubulaire se trouve dans la plage allant de 10 min à 15 min.

4. Procédé hydrothermal selon l'une quelconque des revendications précédentes, dans lequel le réacteur est alimenté par un échangeur de chaleur d'entrée et délivre un flux traité à un échangeur de chaleur de sortie qui réduit la température du flux, et lesdits échangeurs de chaleur sont couplés dans un circuit pour la récupération de chaleur à partir de l'échangeur de chaleur de sortie, et éventuellement le circuit de couplage de récupération de chaleur fait circuler de l'eau à une pression dans la plage allant de 90 bars à 110 bars.

5. Procédé hydrothermal selon l'une quelconque des revendications précédentes, dans lequel l'étape (b) comporte un séparateur de liquide dans lequel un gaz pousseur tel que l'azote N₂ est appliqué sous pression pour pousser le CO vers un flux latéral dans lequel il est traité, et où, à l'étape (c), le flux de CO et de gaz pousseur est traité par son mélange avec de l'air et son acheminement à travers un convertisseur catalytique afin de produire du CO₂, et où l'étape (c) fournit un gaz comprenant de l'azote et du dioxyde de carbone à une température dans la plage allant de 40°C à 60°C, et où, à l'étape (d), le flux liquide est mélangé à du Ca(OH)₂ pour obtenir une réaction de Ca(OH)₂ + Na₂CO₃ pour donner 2NaOH + CaCO₃.

6. Procédé hydrothermal selon l'une quelconque des revendications précédentes, dans lequel le flux d'alimentation du procédé hydrothermal est un flux de déchets de matières solides provenant d'un procédé de raffinage d'alumine, et un flux de sortie issu de l'étape (d) est réalimenté vers une étape de digestion (4) du procédé de raffinage d'alumine, et où le carbonate de sodium est réagi avec de la chaux pour produire de l'hydroxyde de sodium NaOH et du CaCO₃ par la réaction Ca(OH)₂ + Na₂CO₃ => CaCO₃ + 2NaOH.

7. Procédé hydrothermal selon l'une quelconque des revendications précédentes, dans lequel le flux d'alimentation est traité par un système de filtration sous pression (21) avant d'être chauffé et fourni au réacteur tubulaire, et éventuellement un gâteau de filtration contenant des matières solides sèches est dissous dans un cycle de lavage à contre-courant à l'aide d'un condensat ou d'eau, et une pompe à haute pression (23, P-001) est utilisée pour ledit lavage à contre-courant et une solution de sels retourne vers un réservoir de condensat (24, T-001), et ledit réservoir est utilisé comme réservoir d'alimentation vers le réacteur tubulaire (27).

8. Procédé hydrothermal selon l'une quelconque des revendications précédentes, dans lequel une pompe (25, P-002) est utilisée pour pomper l'alimentation à travers un préchauffeur (26, E-001), et la sortie dudit réchauffeur (E-001) est à de 200°C à 260°C et est envoyée vers le réacteur tubulaire (27, R-001).

9. Procédé hydrothermal selon l'une quelconque des revendications précédentes, dans lequel la pression est réduite en aval du réacteur en faisant passer le flux à travers une série de serpentins (31, X-001).

10. Procédé hydrothermal selon l'une quelconque des revendications précédentes, dans lequel le réacteur tubulaire adopte une configuration tubulaire à ailettes, ayant une trajectoire ondulée pour obtenir le temps de rétention souhaité, permettant un chauffage efficace en utilisant du gaz chaud, et éventuellement où un ou plusieurs parmi les échangeurs de chaleur présentent une configuration à double tube (« tube-in-tube »), le tube extérieur transportant de l'eau chaude pressurisée, ou de l'huile thermique pour la récupération de la chaleur.

11. Procédé de raffinage d'alumine comprenant les étapes de digestion et de traitement de minerai pour fournir un flux de déchets comportant de l'oxalate de sodium, et la fourniture d'au moins une partie dudit flux de déchets sous forme de flux d'alimentation à un procédé hydrothermal selon l'une quelconque des revendications précédentes.

12. Procédé de raffinage d'alumine selon la revendication 11, dans lequel le procédé hydrothermal réalimente du filtrat vers l'étape de digestion (4), et où une étape de classification (8) réalimente la liqueur vers l'étape de digestion (4).

13. Procédé de raffinage d'alumine selon les revendications 11 ou 12, dans lequel le flux de déchets du procédé d'alumine est alimenté dans le procédé hydrothermal à partir d'une étape d'épaississement (16) ou d'une étape d'évaporation (15), et est dirigé à travers un filtre à pression en ligne (21) afin de réduire la teneur en liquide du flux de déchets, et les matières solides récupérées sont lavées à contre-courant du filtre pour fournir de la liqueur qui est dirigée vers le réacteur hydrothermal.

14. Procédé de raffinage d'alumine selon l'une quelconque des revendications 11 à 13, dans lequel, dans le procédé hydrothermal, le carbonate de sodium est réagi avec de la chaux pour produire de l'hydroxyde de sodium NaOH et du CaCO₃ par la réaction Ca(OH)₂ + Na₂CO₃ => CaCO₃ + 2NaOH, réduisant l'apport total requis en hydroxyde de sodium frais dans le procédé de raffinage d'alumine.

15. Procédé de raffinage d'alumine selon l'une quelconque des revendications 11 à 14, dans lequel, dans le procédé hydrothermal, le flux d'alimentation est traité par un système de filtration sous pression (21) avant d'être chauffé et fourni au réacteur tubulaire, et où le filtrat issu du système de filtration (21, F-001) retourne au procédé de raffinage d'alumine, et éventuellement, le liquide de l'étape (b) du procédé hydrothermal comporte un liquide refroidi comprenant du carbonate de sodium Na₂CO₃, qui est mélangé avec du Ca(OH)₂, donnant 2NaOH + CaCO₃ solide, qui est réalimenté vers une étape de digestion du procédé de raffinage d'alumine (4).
